# EUROPÄISCHE PATENTSCHRIFT

(11) **EP 2 935 929 B1**
(45) Veröffentlichungstag und Bekanntmachung des Hinweises auf die Patenterteilung: **08.02.2017**
(21) Anmeldenummer: 13811427.7
(22) Anmeldetag: 16.12.2013
(51) Int. Cl.: F16D 63/00

(54) **MITTELS FREMDENERGIE BETÄTIGTE LINEARBREMSE**
LINEAR BRAKE OPERATED BY MEANS OF EXTERNAL ENERGY
FREIN LINÉAIRE ACTIONNÉ AU MOYEN D'UNE ÉNERGIE EXTÉRIEURE

(30) Priorität: 21.12.2012 DE 102012025438
(43) Veröffentlichungstag der Anmeldung: 28.10.2015
(73) Patentinhaber: Chr. Mayr GmbH + Co. KG, 87665 Mauerstetten (DE)
(72) Erfinder: MÜLLER, Alexander, 87600 Kaufbeuren (DE); HECHT, Martin, 87600 Kaufbeuren (DE); DROPMANN, Christoph, 87600 Kaufbeuren (DE)
(74) Vertreter: Ruschke, Hans Edvard
(86) Internationale Anmeldenummer: PCT/EP2013/076679
(87) Internationale Veröffentlichungsnummer: WO 2014/095706

(56) Entgegenhaltungen:
- DE-A1- 10 260 274
- DE-A1-102006 019 410
- US-A1- 2010 065 383

## Beschreibung

Bei der vorliegenden Erfindung handelt es sich um eine durch Zufuhr von Fremdenergie in Form von Druckluft oder Hydrauliköl zu lösende Linearbremse zur Anbringung an einem parallel zu einer Führungsschiene verfahrbaren Schlitten nach dem Oberbegriff des Hauptanspruches. Dabei ist vorgesehen, dass das Gehäuse der Linearbremse die Führungsschiene wenigstens teilweise umgreift und dass im Gehäuse der Linearbremse ein oder mehrere mit Kraftspeichern zusammenwirkende und durch Zufuhr von Fremdenergie betätigbare Aktorelemente angeordnet sind, die eine Klemmwirkung der Linearbremse auf der Führungsschiene bewirken oder aufheben.

Aus dem Stand der Technik sind Bremsen für handelsübliche Führungsschienen bekannt wie sie DE 101 27 664 C1 offenbart. Hierbei wird beschrieben, dass durch einen mittels Federelementen vorgespannten gabelförmig ausgebildeten Magnetanker zwei seitlich der Führungsschiene angeordnete und sich gegenüberstehende Keilelemente quer zur Bewegungsrichtung der Führungsschiene gegen diese gepresst werden und dadurch eine Klemmkraft auf die Führungsschiene ausüben.

Zur Aufhebung der Klemmung ist eine Elektromagnetanordnung vorgesehen, die den Magnetanker gegen die Kraft der Federelemente anzieht und somit die Klemmung zwischen den Keilelementen und der Führungsschiene aufhebt.

Nachteilig an der beschriebenen Bremse ist deren geringe Leistungsdichte, d. h. die geringe je Volumeneinheit der Bremse erzielbare Klemmkraft, die ihre Ursache in der Betätigungsart durch die Elektromagnetanordnung mit deren geringen gegenüber dem Magnetanker erzielbaren Kräften hat.

Eine weitere Bremse für Führungsschienen ist aus DE 10 2006 062 295 B4 bekannt. Diese zeigt eine Klemmvorrichtung zur Anbringung an einem parallel zur einer Führungsschiene bewegbaren Schlitten, wobei die Klemmung auf der Führungsschiene aktiv über ein mittels Zufuhr von Fremdenergie angetriebenes Klemmelement erfolgt, wobei das senkrecht zur Bewegungsrichtung des Schlittens bzw. der Bremse bewegbare gabelförmige Klemmelement direkt über dessen prismenartig ausgebildete symmetrische Innengeometrie mit der Oberfläche der Führungsschiene in Kontakt steht.

Nachteilig an dieser vorbekannten Konstruktion ist die Tatsache, dass die Klemmwirkung nur bei Vorhandensein der externen Energiezufuhr aufrechterhalten bleibt und die Klemmwirkung bei Energieausfall versagt.

Ferner führt der direkte Kontakt zwischen dem in der Bremse bewegbaren gabelförmigen Klemmelement und der Führungsschiene zu hohem Verschleiß an den Kontaktflächen zwischen dem Klemmelement und der Führungsschiene sowie zu Reaktionskräften auf die Bremse, die die Führung des mit der Bremse verbundenen Schlittens auf der Führungsschiene belasten.

Weiterhin bekannt ist die Brems- und/oder Klemmvorrichtung nach der DE 10 2006 019 410 A1 mit einem bereichsweise keilförmigen Betätigungskolben, wobei die Klemmvorrichtung Teil eines an einer Schiene geführten Schlittens ist und zwei beiderseits der Schiene anpressbare Reibbacken aufweist, die von der Federvorspannung und den keilförmigen Abschnitten des Betätigungskolbens in die Klemmstellung gedrückt werden, während eine Druckluft-/Hydrauliköl-Beaufschlagung des Betätigungskolbens entgegen der Federvorspannung zu einem Lösen der Bremse führt. Nachteilig bei dieser Ausführungsform ist insbesondere die weitgehend rechteckige Ausgestaltung des Betätigungskolbens, was zu fertigungs-technischen Schwierigkeiten und zu Festigkeits- bzw. Stabilitätsproblemen im Hinblick auf die Gehäusesteifigkeit der Brems- und / oder Klemmvor-richtung führt.

Zur Erzeugung der Klemmkraft wird bei der Klemmvorrichtung nach der DE 10 2006 019 410 A1 das federelastisch ausgeführte Gehäuse genutzt, welches beim Öffnen der Bremse durch Beaufschlagung der Bremse mit Druckmitteln elastisch aufgebogen wird. Hierbei wirkt sich die begrenzte Gehäusesteifigkeit nachteilig auf die von der Bremse erzielbaren Klemmkräfte aus. Von Nachteil ist außerdem der geringe elastische Federweg des Gehäuses.

Aufgabe der vorliegenden Erfindung ist es demnach, eine technische Verbesserung zum Stand der Technik vorzuschlagen, die bei möglichst geringer Baugröße eine Steigerung der Gehäusestabilität und der auf der Führungsschiene erzielbaren Bremskraft ermöglicht und so konzipiert ist, dass die Klemmkraft durch einen in die Bremse integrierten, jedoch vom Bremsengehäuse unabhängigen Kraftspeicher erzeugt und durch Zufuhr von Fremdenergie in Form von Druckluft oder Hydraulik-Drucköl aufgehoben wird (Fail-safe-Prinzip). Dabei sollen sich die Reibflächen der Reibbacken ohne äußere Reaktionskräfte senkrecht zur Reibfläche der Führungsstange bewegen und zudem weitgehend verschleiß- und wartungsfrei sein.

Erfindungsgemäß wird die Aufgabe mit den Merkmalen des Hauptanspruches gelöst.

Die Bremse ist mit einem die Führungsschiene wenigstens teilweise umgreifenden Gehäuse ausgestattet, in dem sich der Kraftspeicher befindet, der ein oder mehrere die Führungsschiene gabelförmig umgreifende Kolbenelemente quer zur Bewegungsrichtung der Bremse mit einer Kraft beaufschlagt, wobei die Kolbenelemente über geeignet dimensionierte Schrägen zwei beiderseits der Führungsschiene angeordnete und sich gegenüberstehende Keilelemente gegen die beiderseitigen Bremsflächen der Führungsschiene pressen und damit die Bremse auf der Führungsschiene klemmen.

Bei der hier beschriebenen erfindungsgemäßen Vorrichtung ist als Kraftspeicher zum Schließen der Bremse ein aus Tellerfedern gebildetes Federpaket vorgesehen und das Öffnen der Bremse erfolgt durch eine per Druckluft oder Hydraulik-Drucköl betätigte Kolben/Zylinderanordnung, deren Kraft gegen die Kraft des Federpaketes wirkt. Durch diese Kombination aus starken Federelementen und einer Kolben-/Zylinderanordnung hoher Leistungsdichte ist die hier beschriebene erfindungsgemäße Linearbremse in der Lage, bei geringer Baugröße sehr hohe Klemmkräfte zu erzielen. Für die Übertragung der genannten hohen Klemmkräfte ist eine hohe Steifigkeit des Bremsengehäuses erforderlich, was durch die ringförmige Gestaltung der Kolben-/Zylinderanordnung begünstigt wird.

Als Kraftspeicher sind statt der Tellerfedern auch jede andere Art mechanischer Federelemente, druckmittelbeaufschlagte Kolben-/Zylinderanordnungen oder druckmittelbeaufschlagte Membranspeicher denkbar und das Öffnen der Bremse kann alternativ auch durch elektrische, elektromechanische oder piezoelektrische Aktoren erfolgen.

Zur Steigerung des Wirkungsgrades der Kraftübertragung sowie zur weiteren Steigerung der Klemmkräfte sind zwischen den Schrägflächen der gabelförmigen Kolben und den Bremsbacken Wälzelemente vorgesehen, es sind an dieser Stelle jedoch auch Gleitpaarungen mit geeigneten Gleitwerkstoffen denkbar.

Für eine weitere Steigerung der erzielbaren Klemmkraft können mehrere der beschriebenen Klemmanordnungen im Bremsengehäuse in Bewegungsrichtung der Führungsschiene in Reihe hintereinander angeordnet und gemeinsam betätigt werden.

Weiterhin ist die erfindungsgemäße Bremse neben dem Einsatz für Linearführungen auch zum Klemmen rotierender Bauteile geeignet, sofern eine passende Bremsfläche zur Verfügung steht.

Weitere vorteilhafte Details zur Ausgestaltung und Funktionsweise der erfindungsgemäßen Bremse ergeben sich aus den Unteransprüchen der Erfindung sowie aus der Beschreibung der nachstehend genannten Zeichnungen.

Dabei zeigen:
- **Fig. 1**: die räumliche Darstellung einer Außenansicht der Bremse;
- **Fig. 2**: einen Querschnitt durch die erfindungsgemäße Bremseinheit;
- **Fig. 3**: eine Detailansicht Detail A aus dem Querschnitt von Fig. 2 mit vergrößerter Darstellung des Klemmbereiches;
- **Fig. 4**: eine Detailansicht Detail B aus dem Querschnitt von Fig. 2 mit vergrößerter Darstellung der Kolben-/Zylinderanordnung;
- **Fig. 5**: einen Längsschnitt durch eine Ausgestaltung der Linearbremse mit zwei erfindungsgemäßen Bremseinheiten hintereinander in Reihe angeordnet.
- **Fig. 6A, 6B**: zwei perspektivische Ansichten des Bremskolbens von schräg unten bzw. von schräg oben.

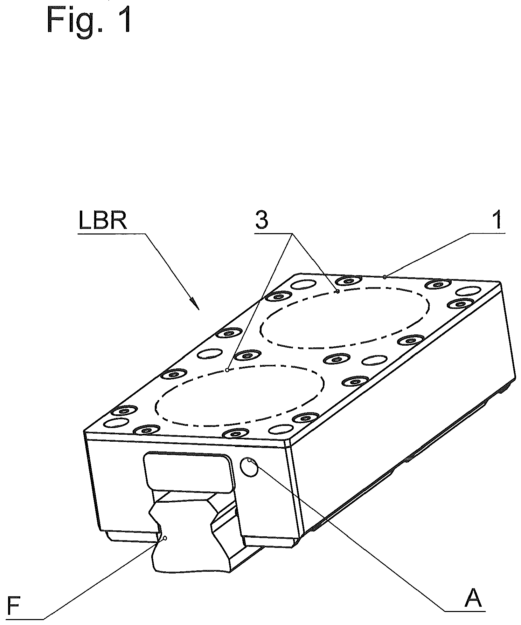

**Fig. 1** zeigt eine perspektivische Außenansicht der erfindungsgemäßen mittels Fremdenergie betätigten Linearbremse (LBR) bestehend aus dem Bremsengehäuse (1), das die ebenfalls dargestellte Führungsschiene (F) teilweise umgreift. Für die Zufuhr der Fremdenergie in Form von Druckluft oder Hydrauliköl verfügt die dargestellte Linearbremse (LBR) am Bremsengehäuse (1) über eine Anschlussbohrung (A) zum Anschluss an eine externe Druckmittelquelle.

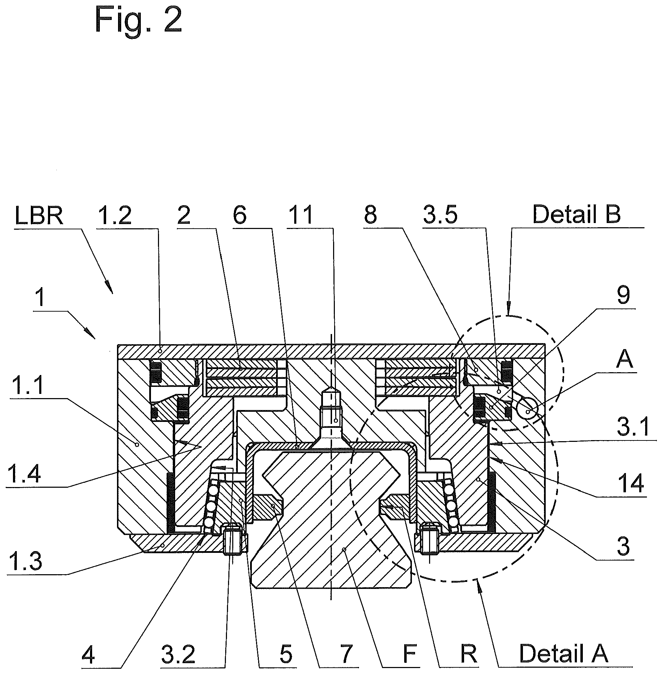

In **Fig. 2** ist ein Querschnitt der erfindungsgemäßen Linearbremse (LBR) quer zur Bewegungsrichtung der Linearbremse (LBR) auf der Führungsschiene (F) dargestellt. In allen Figuren ist der Bremskolben (3) in seiner oberen Endlage dargestellt. Dabei liegt der Kolbenring (8) auf der Innenseite des Gehäusedeckels (1.2) an und die Bremse ist geöffnet.

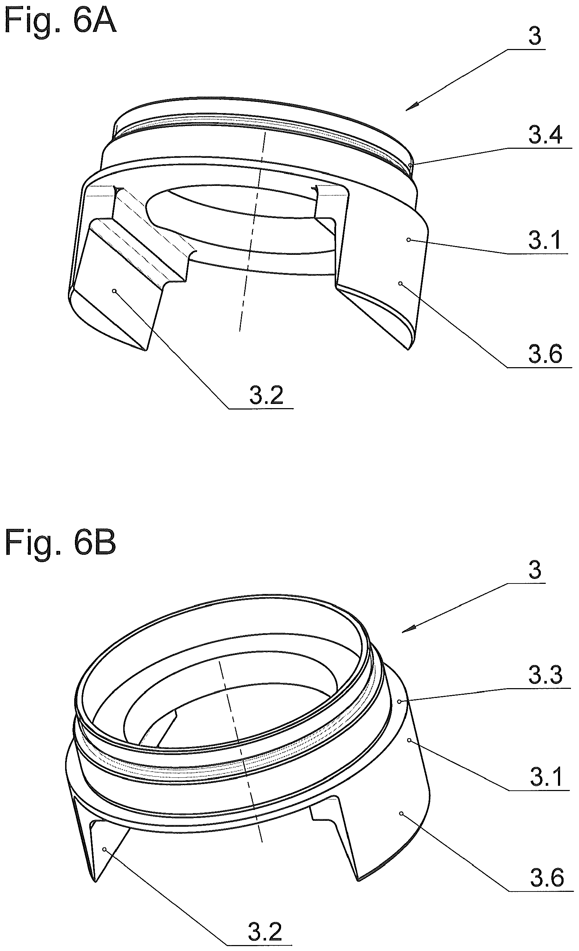

Im dreiteilig aufgebauten und aus den Teilen Gehäusekörper (1.1), Gehäusedeckel (1.2) und Gehäuseboden (1.3) bestehenden, weitgehend symmetrischen Bremsengehäuse (1) befindet sich zunächst ein aus Federelementen (2) bestehender Kraftspeicher, dessen Kraft sich einerseits am Gehäusedeckel (1.2) abstützt und dessen Kraft andererseits den über den insgesamt zylindrischen Kolbenschaft (3.1) in der Gehäusebohrung (1.4) geführten, gabelförmig die Führungsschiene (F) umgreifenden Bremskolben (3) in Richtung zur Führungsschiene (F) drückt. Die gabelförmig gestalteten Kolbenenden (3.6) des Bremskolbens (3) sind besonders deutlich in den Figuren 6A und 6B ersichtlich.

Über die beiden symmetrisch angeordneten radial innen an den beiden Kolbenenden (3.6) vorgesehenen Kolbenschrägen (3.2) wird die Kraft der Federelemente (2) verstärkt und um 90° radial einwärts umgelenkt. Dies bewirkt somit über die Linearwälzlager (4), die Übertragungskeile (5), das Übertragungsblech (6) und die Klemmbacken (7) auf den beiden einander gegenüber liegenden Reibflächen (R) der Führungsschiene (F) eine Klemmung der Linearbremse (LBR) an der Führungsschiene (F).

Zum Öffnen der Linearbremse (LBR) wird die Anschlussbohrung (A) über eine nicht näher dargestellte Druckmittelversorgung mit einem Druckmedium in Gestalt von Druckluft oder Hydrauliköl beaufschlagt, so dass sich im radial auswärts vom zylindrischen Bremskolben (3) liegenden, den Bremskolben ringförmig umgebenden Kolbenraum (3.5) zwischen dem mit dem Bremskolben (3) verbundenen Kolbenring (8) und dem an der gegenüberliegenden Stirnfläche des Kolbenraums vorgesehenen Einlegering (9) ein hydrostatischer Druck aufbaut, der den Bremskolben (3) gegen die Kraft der Federelemente (2) von der Führungsschiene (F) weg entlastet und somit die Klemmung zwischen der Linearbremse (LBR) und der Reibfläche (R) der Führungsschiene (F) aufhebt.

Der in den Erläuterungen zu **Fig. 2** dargestellte Verfahrensablauf beschreibt grundsätzlich die Funktionsweise einer sogenannten Ruhebremse, was bedeutet, dass die Linearbremse (LBR) ohne Zufuhr von Fremdenergie gebremst ist und erst durch Zufuhr von Fremdenergie, im vorliegenden Fall durch Zufuhr von hydrostatischem Druck, geöffnet wird. Dadurch wird dem sogenannten Fail-Safe Prinzip Rechnung getragen, was bedeutet, dass beim Ausfall der zugeführten Fremdenergie, hier in Form hydrostatischen Druckes, die Linearbremse (LBR) gebremst bleibt und dass es dann zu keinen unkontrollierten Bewegungen zwischen Linearbremse (LBR) und Führungsschiene (F) kommt.

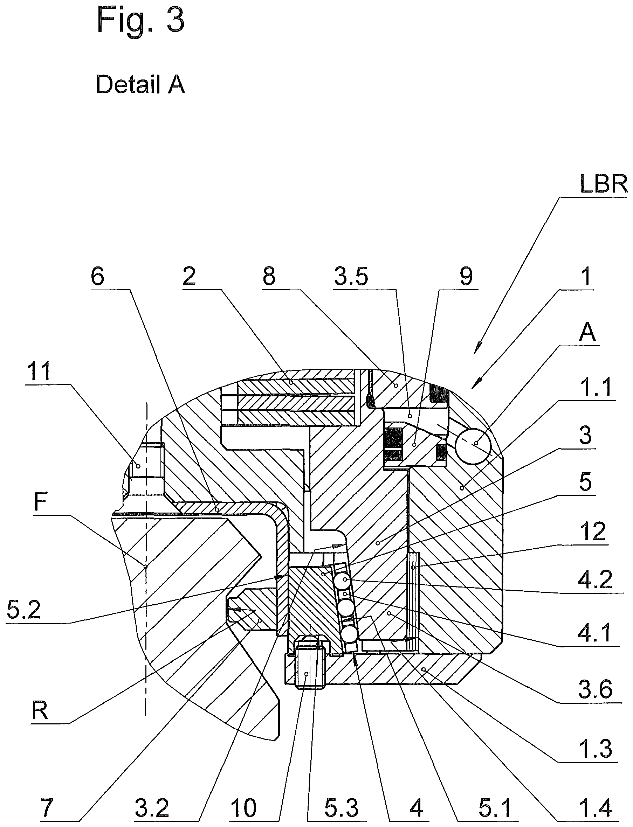

Anhand **Fig. 3**, die mit **Detail A** einen Ausschnitt aus der **Fig. 2** zeigt, wird die Übertragung der Klemmkraft zwischen der Linearbremse (LBR) und der Führungsschiene (F) nochmals verdeutlicht. Die Kraft des Kraftspeichers in Gestalt der Federelemente (2) drückt (bei Druckentlastung des Kolbenraumes (3.5)) den die Führungsschiene (F) mittels der zwei Kolbenenden (3.6) gabelförmig umgreifenden Bremskolben (3) in Richtung zur Führungsschiene (F). Durch das Zusammenwirken von den innen an den Kolbenenden (3.6) vorgesehenen Kolbenschrägen (3.2) mit den entsprechenden Keilschrägen (5.1) der prismatisch ausgebildeten Übertragungskeile (5) wird die Kraft der Federelemente (2) radial einwärts umgelenkt, verstärkt und über den Keilrücken (5.2) der zwei Übertragungskeile (5), das flexible Übertragungsblech (6) und die mit dem Übertragungsblech (6) fest verbundenen Klemmbacken (7) seitlich auf die Reibflächen (R) der Führungsschiene (F) geleitet; dort wird eine Klemmung zwischen der Linearbremse (LBR) und der Führungsschiene (F) bewirkt.

Zur Steigerung des Wirkungsgrades und der Klemmkraft sowie zur Verringerung des Verschleißes können, wie zeichnerisch dargestellt, zwischen den Kolbenschrägen (3.2) der Kolbenenden (3.6) und den Keilschrägen (5.1) der prismatischen Übertragungskeile (5) Linearwälzlager (4) angeordnet sein, die jeweils aus einem Wälzlagerkäfig (4.1) und mehreren Wälzkörpern (4.2), vorzugsweise Zylinderrollen bestehen. Als Wälzkörper sind an Stelle der Zylinderrollen natürlich auch Kugeln, Kegelrollen oder tonnenförmige Rollen möglich. Alternativ zu den Linearwälzlagern (4) können zwischen den Kolbenschrägen (3.2) und den Keilschrägen (5.1) auch geeignete plattenförmige Gleitlagermaterialien angeordnet werden.

Der besondere Vorteil einer Verwendung der beschriebenen plattenförmigen Gleitlagermaterialien gegenüber Linearwälzlagern liegt in deren deutlich geringeren Kosten sowie dem geringeren Herstellungsaufwand für die damit in Wirkverbindung stehenden Oberflächen der Kolbenschrägen (3.2) und der Keilschrägen (5.1), die dann keiner aufwändigen Wärmebehandlung bedürfen.

Das dargestellte U-förmige Übertragungsblech (6) hat mehrere Aufgaben zu erfüllen. Zum einen überträgt es in Bewegungsrichtung der Führungsschiene (F) spielfrei die von den Klemmbacken (7) auf die Reibflächen (R) übertragenen Bremskräfte auf das Bremsengehäuse (1) der Linearbremse (LBR), an dem es mittels der dargestellten Befestigungsschraube (11) angeschraubt sein kann. Zum anderen dient es als elastische Führung und Halterung für die Klemmbacken (7) quer zur Bewegungsrichtung der Linearbremse (LBR) auf der Führungsschiene (F).

Zur Erfüllung dieser Aufgaben kann das Übertragungsblech (6) einerseits mit den Klemmbacken (7) beispielsweise über Kleben, Schrauben oder Schweißen fest verbunden sein und kann andererseits eine feste Verbindung mit dem Bremsengehäuse (1) aufweisen, beispielsweise über Schrauben, Kleben oder Schweißen. Durch eine geeignete konstruktive Gestaltung des Übertragungsbleches (6) und dessen Anbindung an die Klemmbacken (7) und den Gehäusekörper (1.1) wird eine elastische Bewegung der Klemmbacken (7) quer zur Bewegungsrichtung zwischen der Linearbremse (LBR) und der Führungsschiene (F) ermöglicht und gleichzeitig ist eine spielfreie Übertragung der Bremskraft zwischen den Klemmbacken (7) und dem Bremsengehäuse (1) parallel zur Bewegungsrichtung der Linearbremse (LBR) auf der Führungsschiene (F) sichergestellt. Im dargestellten Beispiel der Figuren 2/3 ist das Übertragungsblech (6) durch Befestigungsschrauben (11) mit dem Gehäusekörper (1.1) des Bremsengehäuses (1) verbunden.

Des Weiteren kann das Übertragungsblech (6) durch geeignete Federsteifigkeit und Vorspannung in vorteilhafter Weise so ausgelegt werden, dass es beim Öffnen der Linearbremse (LBR) die mit dem Übertragungsblech (6) fest verbundenen Klemmbacken (7) leicht von den Reibflächen (R) der Führungsschiene (F) abhebt und dadurch separate Rückstellfedern entbehrlich macht.

Damit beispielsweise bei auftretendem Verschleiß der Linearbremse (LBR) eine feinfühlige Nachstellung der Bremswirkung ermöglicht wird, sind in Gewindebohrungen des Gehäusebodens (1.3) Einstellschrauben (10) vorgesehen, die gegen die breiten Keilenden (5.3) der Übertragungskeile (5) drücken und über die Kolbenschräge (3.2) sowie die Keilschräge (5.1) eine Zustellbewegung der Klemmbacken (7) gegen die Reibfläche (R) der Führungsschiene (F) ermöglichen.

Mit der erfindungsgemäßen Linearbremse (LBR) werden auf den Reibflächen (R) der Führungsschiene (F) hohe Klemmkräfte erzeugt, die an den Kolbenenden (3.6) des Kolbens (3) zu großen auswärts gerichteten Biegemomenten führen. Aus diesem Grund sind in der Gehäusebohrung (1.4) im Bereich der Kolbenenden (3.6) aus Gleitwerkstoff bestehende Stützlager (12) vorgesehen, die die Klemmkräfte von den Kolbenenden (3.6) auf den stabilen Gehäusekörper (1.1) des Bremsengehäuses (1) ableiten.

Zur Steigerung des Wirkungsgrades ist es auch denkbar, beim Stützlager (12) den Gleitwerkstoff durch ein geeignetes Wälzlager ähnlich dem Linearwälzlager (4) zu ersetzen.

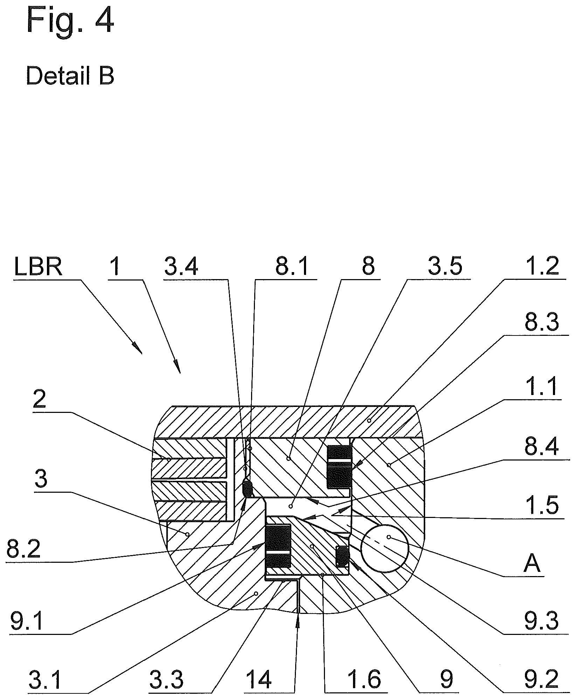

**Fig. 4** zeigt mit **Detail B** eine weitere Einzelheit aus der **Fig. 2** im Bereich der druckmittelbetätigten Kolben/Zylinderanordnung zum Öffnen der Linearbremse (LBR). Die Klemmkraft zum Schließen der Linearbremse (LBR) wird durch die Federelemente (2) des Kraftspeichers erzeugt, die sich einerseits am Gehäusedeckel (1.2) des Gehäuses (1) abstützen und die andererseits eine in der Zeichnung nach unten gerichtete Kraft auf den Bremskolben (3) ausüben.

Wie aus **Fig. 4** ersichtlich wird, ist zum Öffnen der Linearbremse (LBR) eine Kolben-/Zylinderanordnung vorgesehen, die im Wesentlichen aus den Bauteilen Gehäusekörper (1.1), Bremskolben (3), Kolbenring (8) und Einlegering (9) sowie aus den erforderlichen Dichtungen besteht. Die **Fig. 4** zeigt - wie auch die anderen Figuren - die Bremse im geöffneten Zustand, d.h. der Kolbenraum (3.5) unterliegt in der **Fig. 4** der erforderlichen Druckbeaufschlagung, um den Kolbenring (8) entgegen der Kraft der Federelemente (2) des Kraftspeichers in Anlage an der Unterseite des Gehäusedeckels (1.2) zu drücken.

Die ringförmige Kolben-/Zylinderanordnung ist konzentrisch zu den Federelementen (2) des Kraftspeichers so angeordnet, dass sie die Federelemente (2) räumlich umschließt bzw. in sich aufnimmt. Dadurch kann eine vorteilhaft geringe Bauhöhe des Gehäuses (1) der erfindungsgemäßen Linearbremse (LBR) erzielt werden.

Damit trotz dieser konzentrischen Anordnung und gedrängten Bauweise eine große Kolbenfläche zur Erzeugung der für das Öffnen der Linearbremse (LBR) erforderlichen Kraft zur Verfügung steht, ist die Kolben-/Zylinderanordnung wie nachfolgend beschrieben aufgebaut.

Der Bremskolben (3) weist an seinem oberen Ende im Bereich des Kolbenabsatzes (3.3) und des Kolbengewindes (3.4) einen gegenüber dem Kolbenschaft (3.1) verringerten Außendurchmesser auf. Auf dem Kolbengewinde (3.4) ist über ein Kolbenringgewinde (8.1) der Kolbenring (8) aufgeschraubt, der über die Kolbenringinnendichtung (8.2) statisch gegenüber dem Bremskolben (3) und über die Kolbenringaußendichtung (8.3) dynamisch gegenüber der Gehäuseerweiterung (1.5) abgedichtet ist.

In dem sich durch den Kolbenabsatz (3.3) und den Gehäuseabsatz (1.6) ergebenden kreisringförmigen Kolbenraum (3.5) ist ein Stützring (9) angeordnet, der über die Stützringinnendichtung (9.1) dynamisch gegenüber dem Bremskolben (3) und über die Stützringaußendichtung (9.2) statisch gegenüber der Gehäuseerweiterung (1.5) abgedichtet ist.

Durch den Stützring (9) ist es möglich, die sich aus dem Kolbenabsatz (3.3) und den Gehäuseabsatz (1.6) ergebenden einzelnen Kreisringflächen als wirksame Angriffsfläche für das im Kolbenraum (3.5) befindliche Druckmedium zu addieren und somit für das Öffnen der Linearbremse (LBR) größere gegen die Federelemente (2) des Kraftspeichers gerichtete Kräfte zu erzielen.

Zum Öffnen der Linearbremse (LBR) wird über die Anschlussbohrung (A) ein Druckmedium in den Kolbenraum (3.5) zugeführt, das über die Kolbenringwirkfläche (8.4) und über die gleich große Stützringwirkfläche (9.3) die zum Öffnen der Linearbremse (LBR) erforderliche Kraft gegen die Kraft der Federelemente (2) auf den Bremskolben (3) erzeugt. Dieser geöffnete Zustand ist in allen Figuren gezeigt. Dabei lösen sich die Klemmbacken (7) in einem in den Zeichnungen praktisch unsichtbaren Maß von der Reibfläche (R) der Führungsschiene (F).

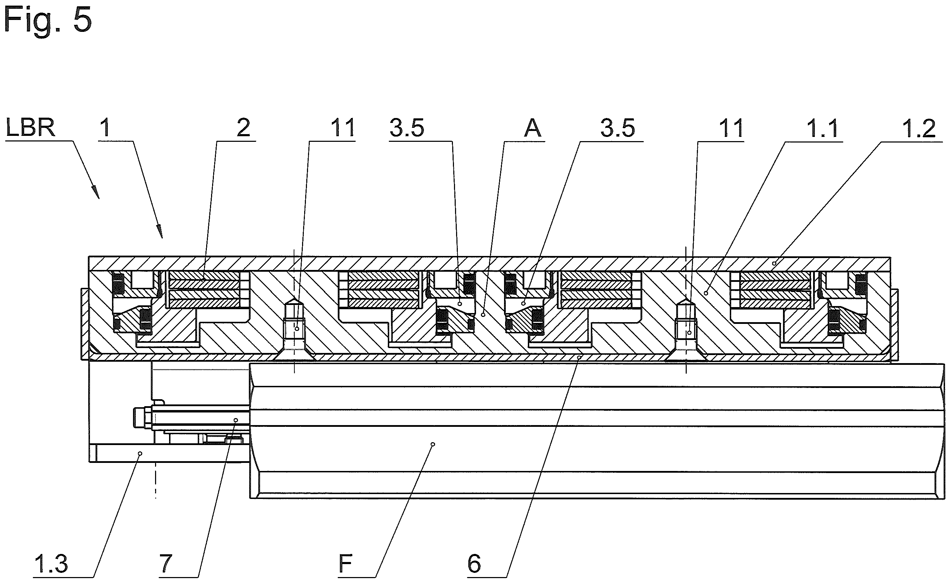

**Fig. 5** zeigt schließlich einen Längsschnitt durch eine bevorzugte Ausgestaltung der erfindungsgemäßen Linearbremse (LBR), woraus ersichtlich ist, dass die Möglichkeit besteht, zur Erzielung möglichst großer Klemmkräfte in Bewegungsrichtung der Linearbremse (LBR) auf der Führungsschiene (F) mehrere erfindungsgemäße Bremssysteme bestehend aus Kraftspeichern mit Federelementen (2) und Kolben-/Zylinderanordnungen in Reihe hintereinander anzuordnen.

Im Ausführungsbeispiel der **Fig. 5** sind zwei Bremssysteme hintereinander (in Reihe) dargestellt. Zur synchronen Betätigung beider hintereinander angeordneten Bremssysteme über das zugeführte Druckmittel sind die kreisringförmigen Kolbenräume (3.5) durch weitere Anschlussbohrungen (A) miteinander verbunden.

Weiterhin ist aus **Fig. 5** die Befestigung des Übertragungsbleches (6) im Gehäusekörper (1.1) mittels der Befestigungsschrauben (11) ersichtlich.

### Bezugszeichenliste:

- A: Anschlussbohrung
- LBR: Linearbremse
- F: Führungsschiene
- R: Reibfläche
- 1: Bremsengehäuse
- 1.1: Gehäusekörper
- 1.2: Gehäusedeckel
- 1.3: Gehäuseboden
- 1.4: Gehäusebohrung
- 1.5: Gehäuseerweiterung
- 1.6: Gehäuseabsatz
- 2: Federelement / Kraftspeicher
- 3: Bremskolben / Ringkolben
- 3.1: Kolbenschaft
- 3.2: Kolbenschräge
- 3.3: Kolbenabsatz
- 3.4: Kolbengewinde
- 3.5: Kolbenraum
- 3.6: Kolbenende
- 4: Linearwälzlager
- 4.1: Wälzlagerkäfig
- 4.2: Wälzkörper
- 5: Übertragungskeil
- 5.1: Keilschräge
- 5.2: Keilrücken
- 5.3: Keilende
- 6: Übertragungsblech
- 7: Klemmbacke
- 8: Kolbenring
- 8.1: Kolbenringgewinde
- 8.2: Kolbenringinnendichtung
- 8.3: Kolbenringaußendichtung
- 8.4: Kolbenringwirkfläche
- 9: Stützring/Einlegering
- 9.1: Stützringinnendichtung
- 9.2: Stützringaußendichtung
- 9.3: Stützringwirkfläche
- 10: Einstellschraube
- 11: Befestigungsschraube
- 12: Stützlager
- 14: zylindrische Trennfuge zwischen Kolbenschaft 3.1 und Gehäusekörper 1.1

## Patentansprüche

1. Linearbremse (LBR) zur Anbringung an einem entlang einer Führungsschiene (F) bewegbaren Schlitten,
- mit einem die Führungsschiene (F) wenigstens teilweise umgreifenden Bremsengehäuse (1),
- mit einem am oder im Bremsengehäuse (1) angeordneten Kraftspeicher (2),
- mit einem durch den Kraftspeicher axial beaufschlagten Bremskolben (3), dessen vom Bremskolben axial hervorstehende Kolbenenden (3.6) die Führungsschiene (F) gabelförmig umgreifen,
- wobei der Bremskolben (3) zum Bremsen/Klemmen durch den Kraftspeicher (2) quer zur Bewegungsrichtung zwischen Schlitten und Führungsschiene (F) verstellbar ist,
- wobei die Kolbenenden (3.6) des Bremskolbens (3) beiderseits der Führungsschiene (F) angeordnete, sich gegenüberstehende Kolbenschrägen (3.2) aufweisen, die mit Keilschrägen (5.1) kooperieren, die an durch ein U-förmiges Übertragungsblech (6) verbundenen Klemmbacken (7) beiderseits der Führungsschiene (F) vorgesehen sind,
- wobei die Klemmbacken (7) aufgrund der Anpresskraft des Kraftspeichers (2) am Bremskolben gegen die Führungsschiene (F) gepresst werden,
- und wobei am Bremskolben (3) ein Kolbenraum (3.5) vorgesehen ist, der über eine Anschlussbohrung (A) mit einem Druckmittel entgegen der Kraft des Kraftspeichers (2) beaufschlagbar ist und ein Öffnen der Linearbremse bewirkt,
**dadurch gekennzeichnet, dass**
- der Bremskolben (3) als zylindrischer Ringkolben ausgeführt ist, der auf der einen Stirnseite von dem zentrisch im Ringkolben angeordneten Kraftspeicher (2) beaufschlagt ist und auf der anderen Stirnseite die Kolbenenden (3.6) mit den Schrägflächen (3.2) aufweist,
- und dass der Kolbenraum (3.5) ringförmig und auf der radialen Außenseite des zylindrischen Ringkolbens (3) im Bereich der Trennfuge (14) zwischen dem Ringkolben und dem Gehäusekörper (1.1) ausgebildet ist,
- wobei ein radial außen mit dem Ringkolben verbundener Kolbenring (8) den Kolbenraum (3.5) stirnseitig begrenzt.

2. Linearbremse nach Anspruch 1, **dadurch gekennzeichnet, dass** die dem Kolbenring (8) axial gegenüberliegende Stirnfläche des Kolbenraumes (3.5) von dem Kolbenabsatz (3.3) und von dem Gehäuseabsatz (1.6) jeweils beiderseits der Trennfuge (14) ausgebildet wird.

3. Linearbremse nach Anspruch 1 oder 2, **dadurch gekennzeichnet, dass** die dem Kolbenring (8) axial gegenüberliegende Stirnfläche des Kolbenraumes (3.5) von einem die beiden Absätze (3.3 und 1.6) überbrückenden Stütz-/Einlegering (9) gebildet wird, der die Flächen der vorgenannten Absätze zu einer gemeinsamen, vom Druckmittel des Kolbenraumes (3.5) beaufschlagbaren Stützringwirkfläche (9.3) addiert.

4. Linearbremse nach einem der voranstehenden Ansprüche, **dadurch gekennzeichnet, dass** es sich bei dem zum Schließen der Linearbremse (LBR) vorgesehenen Kraftspeicher um mechanische Federelemente (2), vorzugsweise um Tellerfedern handelt.

5. Linearbremse nach einem der voranstehenden Ansprüche, **dadurch gekennzeichnet, dass** zwischen den Kolbenschrägen (3.2) und den Keilschrägen (5.1) Linearwälzlager (4) angeordnet sind.

6. Linearbremse nach einem der voranstehenden Ansprüche 1-4, **dadurch gekennzeichnet, dass** zwischen den Kolbenschrägen (3.2) und den Keilschrägen (5.1) Gleitlagerelemente angeordnet sind.

7. Linearbremse nach mindestens einem der voranstehenden Ansprüche, **dadurch gekennzeichnet, dass** zur Abstützung der auf die Kolbenenden (3.6) wirkenden Biegemomente im Gehäusekörper (1.1) Stützlager (12) vorgesehen sind.

8. Linearbremse nach Anspruch 7, **dadurch gekennzeichnet, dass** die im Gehäusekörper (1.1) angeordneten Stützlager (12) als Gleitlager ausgeführt sind.

9. Linearbremse nach Anspruch 7, **dadurch gekennzeichnet, dass** die im Gehäusekörper (1.1) angeordneten Stützlager (12) als Linearwälzlager ausgeführt sind.

10. Linearbremse nach mindestens einem der voranstehenden Ansprüche, **dadurch gekennzeichnet, dass** die Keilschrägen (5.1) an verschieblichen Übertragungskeilen (5) vorgesehen sind und für eine Spiel- und / oder Verschleißnachstellung der Linearbremse (LBR) mit Hilfe von Einstellschrauben (10) im Gehäuseboden (1.3) verstellbar sind.

11. Linearbremse nach einem der voranstehenden Ansprüche, **dadurch gekennzeichnet, dass** mehrere Bremssysteme bestehend aus Federelementen (2) und Kolben-/Zylinderanordnungen in Bewegungsrichtung der Linearbremse (LBR) auf der Führungsschiene in Reihe hintereinander angeordnet sind (Fig. 5).

12. Linearbremse nach mindestens einem der voranstehenden Ansprüche, **dadurch gekennzeichnet, dass** das Übertragungsblech (6) der Linearbremse (LBR) mit einer Federsteife ausgelegt und so ausgeführt ist, dass es bei geöffneter Linearbremse (LBR) die Klemmbacken (7) federnd auf Distanz zu den Reibflächen (F) der Führungsschiene (F) hält.

## Claims

1. A linear brake (LBR) for attachment to a slide element movable along a guide rail (F), comprising
- a brake housing (1) at least partly embracing the guide rail (F);
- force storage means (2) disposed on or in the brake housing (1);
- a brake piston (3) axially engaged by the force storage means of which the piston ends (3.6) axially projecting from the brake piston embrace the guide rail (F) in fork fashion; with
- the brake piston (3) being adjustable between the slide element and the guide rail (F) in a direction transverse to the direction of movement for braking/ clamping, with
- the piston ends (3.6) of the brake piston (3) having on either side of the guide rail (F) oppositely directed piston bevels (3.2) cooperating with wedge bevels (5.1) provided on both sides of the guide rail (f) on clamping jaws (7) joined by a U-shaped sheet metal transmission member (6), with
- the clamping jaws (7) being urged against the guide rail (F) by the gripping force which the force storage means (2) exerts on the brake piston, and with
- the brake piston (3) having thereon a piston space (3.5) adapted to be pressurized by a pressure fluid against the force exerted by the force storage means (2) through a bore (A) and acting to disengage the linear brake; **characterized in that**
- the brake piston (3) has the form of a cylindrical ring piston engaged on one end by the force storage means (2) centrally disposed in said ring piston and having at the other end the piston ends (3.6) comprising the piston bevels (3.2) and
- **in that** the piston space (3.5) is annularly ring-shaped and configured on the radial outside of the cylindrical ring piston (3) in the area of the separating gap (14) between the ring piston and the body (1.1) of the housing,
- with a piston ring (8) connected radially outside thereof with said ring piston delimiting the piston space (3.5) at the end face thereof.

2. Linear brake as claimed in claim 1, **characterized in that** the end face of the piston space (3.5) axially opposite the piston ring (8) is formed by the piston shoulder (3.3) and the housing shoulder (1.6) on both sides of separating gap (14).

3. Linear brake as claimed in claims 1 or 2, **characterized in that** the end face axially opposite piston ring (8) of piston space (3.5) is formed by a supporting/insert ring (9) bridging the shoulders (3.3 and 1.6), said ring (9) adding the surface areas of the aforesaid shoulders to define an effective joint supporting ring surface area (9.3) adapted to receive the pressure fluid.

4. Linear brake as claimed in any one of the preceding claims, **characterized in that** the force storage means provided for engaging the linear brake (LBR) comprise mechanical spring elements (2), preferably Belleville washers.

5. Linear brake as claimed in any one of the preceding claims, **characterized by** linear anti-friction bearings (4) provided between the piston bevels (3.2) and the wedge bevels (5.1).

6. Linear brake as claimed in any one of the preceding claims 1-4, **characterized by** slide contact bearing elements provided between the piston bevels (3.2) and the wedge bevels (5).

7. Linear brake as claimed in at least one of the preceding claims, **characterized by** bearing elements (12) provided in the housing body (1.1) for supporting the bending torques acting on the piston ends (3.6).

8. Linear brake as claimed in claim 7, **characterized in that** the bearing elements (12) provided in housing body (1.1) comprise sliding contact bearings.

9. Linear brake as claimed in claim 7, **characterized in that** the bearing elements (12) provided in housing body (1.1) comprise linear anti-friction bearings.

10. Linear brake as claimed in at least one of the preceding claims, **characterized in that** the wedge bevels (5.1) are provided on slidingly movable transmission wedges (5) and are provided for clearance and/or wear adjustment of the linear brake (LBR) with adjusting screws in the housing bottom (1.3).

11. Linear brake as claimed in any one of the preceding claims, **characterized by** a plurality of brake systems mounted on the guide rail one behind the other in the direction of movement of linear brake (LBR), each said brake systems comprising the spring elements (2) and piston/cylinder assemblies.

12. Linear brake as claimed in any one of the preceding claims, **characterized in that** the sheet metal transmission member (6) of the linear brake (LBR) is dimensioned to provide an appropriate spring stiffness and is configured so that, with the linear brake (LBR) in the disengaged condition, it resiliently keeps the clamping jaws (7) at a distance from the friction surfaces (F) of the guide rail (F).

## Revendications

1. Frein linéaire (FRL) à installer sur un chariot mobile le long d'un rail de guidage (F),
- comprenant un boîtier de frein (1) entourant en partie au moins le rail de guidage (F),
- comprenant un accumulateur de force (2) disposé sur le boîtier de frein (1) ou dans celui-ci,
- comprenant un piston de frein (3) pouvant être sollicité axialement par l'accumulateur de force, dont les extrémités de piston (3.6) faisant saillie du piston de frein axialement entourent le rail de guidage (F) à la manière d'une fourche,
- le piston de frein (3) pour le freinage/serrage pouvant être ajusté par l'accumulateur de force (2) transversalement à la direction de déplacement entre le chariot et le rail de guidage (F),
- les extrémités de piston (3.6) du piston de frein (3) présentant des biseaux de piston (3.2) disposés de part et d'autre du rail de guidage (F), se faisant face, lesquels coopèrent avec des biseaux de calage (5.1) qui sont prévus de part et d'autre du rail de guidage (F), en des mâchoires de serrage (7) reliées par une tôle de transmission (6) en forme de U,
- les mâchoires de serrage (7) étant pressées contre le rail de guidage (F) du fait de la force de compression de l'accumulateur de force (2) sur le piston de frein,
- et une chambre de piston (3.5) étant prévue en le piston de frein (3), laquelle peut être sollicitée par l'intermédiaire d'un alésage de raccordement (A) par un médium de pression dans le sens opposé à la force de l'accumulateur de force (2) et provoque une ouverture du frein linéaire,
**caractérisé en ce**
- **que** le piston de frein (3) est réalisé sous la forme d'un piston annulaire cylindrique qui est sollicité sur l'un des côtés frontaux par l'accumulateur de force (2) disposé de manière centrée dans le piston annulaire et qui présente sur l'autre côté frontal les extrémités de piston (3.6) pourvues des surfaces biseautées (3.2),
- et **que** la chambre de piston (3.5) est réalisée en forme d'anneau et sur le côté extérieur radial du piston annulaire (3) cylindrique dans la zone du joint de séparation (14) entre le piston annulaire et le corps de boîtier (1.1),
- un segment de piston (8) relié radialement extérieure au piston annulaire délimitant la chambre de piston (3.5) du côté frontal.

2. Frein linéaire selon la revendication 1, **caractérisé en ce que** la surface frontale faisant face axialement au segment de piston (8) de la chambre de piston (3.5) est réalisée par le talon de piston (3.3) et par le talon de boîtier (1.6) à chaque fois de part et d'autre du joint de séparation (14).

3. Frein linéaire selon la revendication 1 ou 2, **caractérisé en ce que** la surface frontale faisant face axialement au segment de piston (8) de la chambre de piston (3.5) est formée par un anneau de support/d'insertion (9) surmontant les deux talons (3.3 et 1.6), lequel ajoute les surfaces des talons mentionnés plus haut en une surface active d'anneau de support (9.3) commune pouvant être sollicitée par du médium de pression de la chambre de piston (3.5).

4. Frein linéaire selon l'une quelconque des revendications précédentes, **caractérisé en ce que** l'accumulateur de force prévu afin de fermer le frein linéaire (FRL) est des éléments de ressort (2) mécaniques, de préférence des rondelles-ressorts.

5. Frein linéaire selon l'une des revendications précédentes, **caractérisé en ce que** des paliers à rouleaux linéaires (4) sont disposés entre les biseaux de piston (3.2) et les biseaux de calage (5.1).

6. Frein linéaire selon l'une des revendications 1 - 4 précédentes, **caractérisé en ce que** des éléments de palier lisse sont disposés entre les biseaux de piston (3.2) et les biseaux de calage (5.1).

7. Frein linéaire selon l'une au moins des revendications précédentes, **caractérisé en ce que** des paliers de support (12) sont prévus dans le corps de boîtier (1.1) pour soutenir les moments de flexion agissant sur les extrémités de piston (3.6).

8. Frein linéaire selon la revendication 7, **caractérisé en ce que** les paliers de support (12) disposés dans le corps de boîtier (1.1) sont réalisés en tant que paliers lisses.

9. Frein linéaire selon la revendication 7, **caractérisé en ce que** les paliers de support (12) disposés dans le corps de boîtier (1.1) sont réalisés en tant que paliers à rouleaux linéaires.

10. Frein linéaire selon au moins l'une des revendications précédentes, **caractérisé en ce que** les biseaux de calage (5.1) sont prévus sur des cales de transmission (5) pouvant coulisser et peuvent être ajustés dans le fond de boîtier (1.3) à l'aide de vis de réglage (10) pour un ajustement ultérieur de jeu et/ou d'usure du frein linéaire (FRL).

11. Frein linéaire selon l'une des revendications précédentes, **caractérisé en ce que** plusieurs systèmes de frein constitués d'éléments de ressort (2) et d'ensembles de piston et de cylindres sont disposés dans la direction de déplacement du frein linéaire (FRL) sur le rail de guidage de manière alignée les uns derrière les autres (fig. 5).

12. Frein linéaire selon l'une au moins des revendications précédentes, **caractérisé en ce que** la tôle de transmission (6) du frein linéaire (FRL) est configurée avec une rigidité de ressort et est réalisée de telle sorte qu'elle maintienne les mâchoires de serrage (7) à distance des surfaces de frottement (F) du rail de guidage (F) lorsque le frein linéaire (FRL) est ouvert.
